# EUROPEAN PATENT APPLICATION

(11) **EP 2 519 035 A1**
(43) Date of publication of application: **31.10.2012**
(21) Application number: 12003007.7
(22) Date of filing: 27.04.2012
(51) Int. Cl.: H04W 4/02

(54) **Method of handling velocity triggered supl service and related communication device**

(30) Priority: 28.04.2011 US 201161480343 P; 25.04.2012 US 201213455142
(71) Applicant: HTC Corporation, Taoyuan County 330 (TW)
(72) Inventor: Chien, Ho-Sung, Taoyuan City Taoyuan County 330 (TW)
(74) Representative: Carstens, Dirk Wilhelm

(57) **Abstract**

A method of handling a velocity triggered service for a communication device in a service system is disclosed. The method comprises obtaining at least one first trigger parameter of the velocity triggered service from a location platform of the service system, after an agent in the communication device receives a position request; obtaining a calculated velocity and a calculated position of the communication device, if a current velocity of the communication device satisfies a criterion determined according to the at least one first trigger parameter; and reporting the calculated velocity and the calculated position of the communication device to the agent in the communication device, if the calculated velocity of the communication device satisfies a trigger condition.

## Description

### Cross Reference To Related Applications

This application claims the benefit of U.S. Provisional Application No. 61/480,343, filed on Apr. 28, 2011 and entitled "Detail Flow of velocity triggered SUPL service", the contents of which are incorporated herein in their entirety.

### Background of the Invention

### 1. Field of the Invention

The present invention relates to a method used in a service system and related communication device, and more particularly, to a method of handling velocity triggered secure user plane location (SUPL) service and related communication device.

### 2. Description of the Prior Art

Open Mobile Alliance (OMA) is founded to develop OMA specifications for mobile services to meet users' needs. Furthermore, the OMA specifications aim to facilitate providing of the mobile services which are interoperable across geographic areas (e.g. countries), operators, service providers, networks, operation systems and mobile devices. In detail, the mobile services conforming to the OMA specifications can be used by the users without being restricted to particular operators and service providers. The mobile services conforming to the OMA specifications are also bearer agnostic, i.e., the bearer that carries the mobile services can be a second generation (2G) mobile system such as Global System for Mobile Communications (GSM), Enhanced Data rates for GSM Evolution (EDGE) or General Packet Radio Service (GPRS), or a third generation (3G) and beyond mobile system such as Universal Mobile Telecommunications System (UMTS), Long Term Evolution (LTE) or LTE-Advanced (LTE-A). Further, the mobile services conforming to the OMA specifications can be executed on various operation systems such as Windows, Android or Linux operated on various mobile devices. Therefore, industries providing the mobile devices or the mobile services supporting the OMA specifications can benefit from a largely growing market enabled by interoperability of the mobile services. Besides, the users use the mobile devices or the mobile services supporting the OMA specifications can also have a better experience due to the interoperability of the mobile services.

Besides, the OMA develops secure user plane location (SUPL) for enabling location based services realized via transmission of assistance and positioning data over an internet protocol (IP) bearer. Functions and operations of the SUPL are defined in SUPL specifications. Further, entities such as a SUPL location platform (SLP), a SUPL agent and a SUPL enabled terminal (SET) are defined for realizing the functions and the operations of the SUPL. In detail, the SLP is responsible for location service management and position determination. The SET is a logical entity in a device (e.g., communication device) capable of communicating with a SUPL network providing the IP bearer. The SUPL agent is a service access point which accesses network resources to obtain location information, and is preferably installed in the SLP or the SET.

In one of the SUPL specifications, the OMA SUPL v3. 0 Requirement document, there is one requirement: the SUPL should support velocity triggers. That is, there should be a velocity triggered SUPL service capable of detecting when a velocity of the SET reaches a predetermined level, i.e., the velocity triggered SUPL service is able to be triggered by a velocity event. Besides, The SUPL agent should be notified when the velocity event is triggered. Therefore, a process according to which the velocity triggered SUPL service operates should be defined, and is a topic to be addressed.

### Summary of the Invention

The present invention therefore provides a method and related communication device for handling a velocity triggered secure user plane location (SUPL) service to solve the abovementioned problems.

A method of handling a velocity triggered service for a communication device in a service system is disclosed. The method comprises obtaining at least one first trigger parameter of the velocity triggered service from a location platform of the service system, after an agent in the communication device receives a position request; obtaining a calculated velocity and a calculated position of the communication device, if a current velocity of the communication device satisfies a criterion determined according to the at least one first trigger parameter; and reporting the calculated velocity and the calculated position of the communication device to the agent in the communication device, if the calculated velocity of the communication device satisfies a trigger condition.

A method of handling a velocity triggered service, for a communication device in a service system is disclosed. The method comprises obtaining at least one trigger parameter of the velocity triggered service from a location platform of the service system, after receiving an initiation message transmitted by the location platform; obtaining a calculated velocity and a calculated position of the communication device, if a current velocity of the communication device satisfies a criterion determined according to the at least one trigger parameter; and reporting the calculated velocity and the calculated position of the communication device to a agent in the location platform, if the calculated velocity of the communication device satisfies a trigger condition.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a service system according to an example of the present invention.

Fig. 2 is a schematic diagram of a communication device according to an example of the present invention.

Fig. 3 is a flowchart of a process according to an example of the present invention.

Fig. 4 is a flowchart of a process according to an example of the present invention.

Fig. 5 is a flowchart of a process according to an example of the present invention.

Fig. 6 is a flowchart of a process according to an example of the present invention.

### Detailed Description

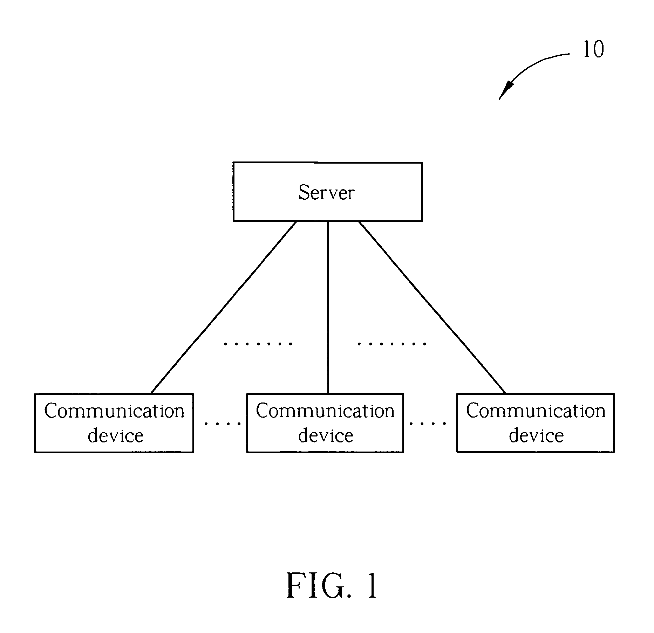

Please refer to Fig. 1, which is a schematic diagram of a service system 10 according to an example of the present invention. The service system 10 supports secure user plane location (SUPL) developed by Open Mobile Alliance (OMA), and is briefly composed of a Home SUPL location platform (H-SLP) and a plurality of SUPL enabled terminals (SETs). The H-SLP and the SET can exchange location information for performing a SUPL service. For example, the H-SLP can provide assistance location information to the SET, to improve accuracy of positioning. Further, the SET can initiate the SUPL service, when a SUPL agent is installed in the SET. Similarly, the H-SLP can initiate the SUPL service, when the SUPL agent is installed in the H-SLP.

In Fig. 1, a SET and the H-SLP are simply utilized for illustrating a structure of the service system 10. Practically, the SETs can be desktops and home electronics which are fixed at a certain position. Alternatively, the SETs can be mobile devices such as mobile phones, laptops, tablet computers, electronic books, and portable computer systems. The H-SLP can be a server for handling requests and responses generated by the SET. The service system can be bearer agnostic, i.e., the bearer used for exchanging the location information can be a second generation (2G) mobile system such as Global System for Mobile Communications (GSM), Enhanced Data rates for GSM Evolution (EDGE) or General Packet Radio Service (GPRS), a third generation (3G) and beyond mobile system such as Universal Mobile Telecommunications System (UMTS), Long Term Evolution (LTE) or LTE-Advanced, or even a wireline communication system such as an Asymmetric Digital Subscriber Line (ADSL).

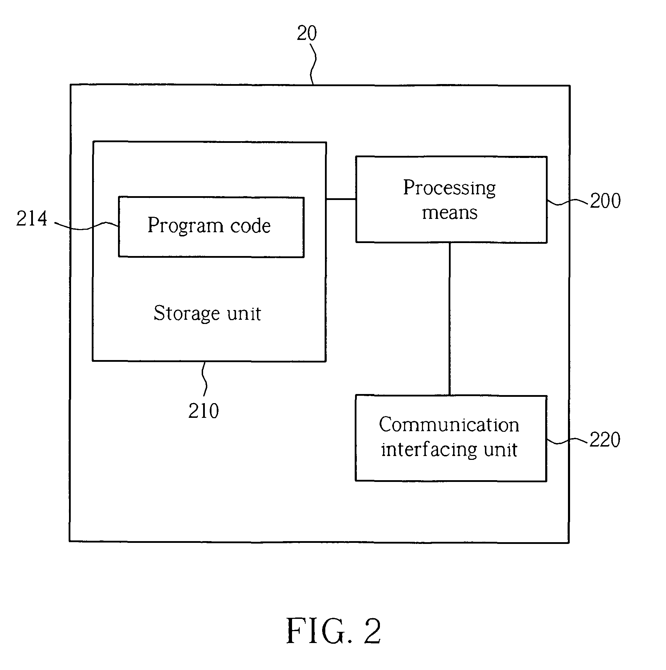

Please refer to Fig. 2, which is a schematic diagram of a communication device 20 according to an example of the present invention. The communication device 20 can be a SET or the H-SLP shown in Fig. 1. The communication device 20 may include a processing means 200 such as a microprocessor or an Application Specific Integrated Circuit (ASIC), a storage unit 210 and a communication interfacing unit 220. The storage unit 210 may be any data storage device that can store a program code 214, accessed by the processing means 200. Examples of the storage unit 210 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 220 is preferably a transceiver, and can transmit/receive a message according to processing results of the processing means 200.

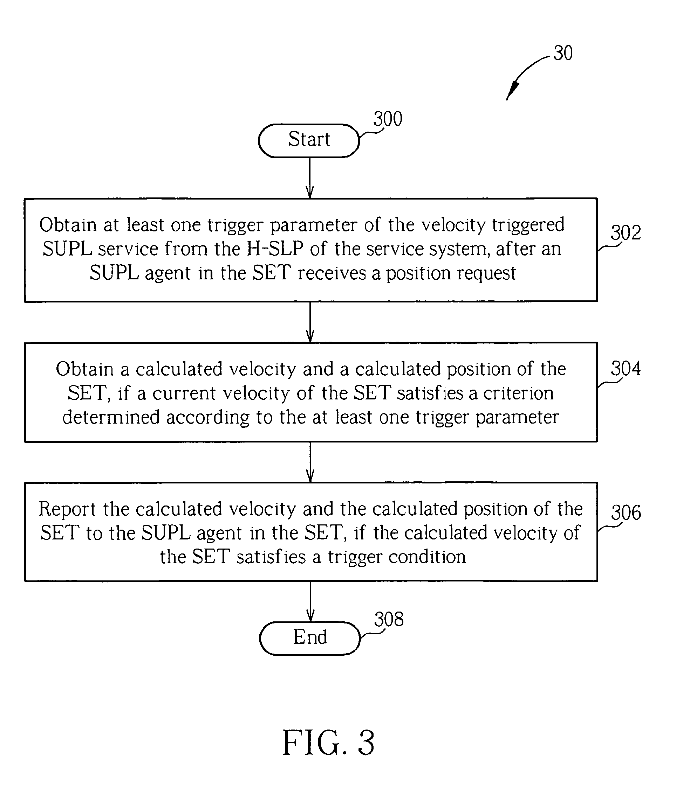

Please refer to Fig. 3, which is a flowchart of a process 30 according to an example of the present invention. The process 30 is utilized in a SET shown in Fig. 1, for handling a velocity triggered SUPL service initiated by the SET. The process 30 may be compiled into the program code 214 and includes the following steps:

Step 300: Start.

Step 302: Obtain at least one trigger parameter of the velocity triggered SUPL service from the H-SLP of the service system, after an SUPL agent in the SET receives a position request.

Step 304: Obtain a calculated velocity and a calculated position of the SET, if a current velocity of the SET satisfies a criterion determined according to the at least one trigger parameter.

Step 306: Report the calculated velocity and the calculated position of the SET to the SUPL agent in the SET, if the calculated velocity of the SET satisfies a trigger condition.

Step 308: End.

According to the process 30, after an SUPL agent in the SET receives a position request (i.e., the velocity triggered SUPL service is initiated by the SET), the SET first obtains at least one trigger parameter of the velocity triggered SUPL service from the H-SLP of the service system. Then, the SET obtains (e.g., calculates or receives) a calculated velocity and a calculated position of the SET, if a current velocity of the SET satisfies a criterion determined according to the at least one trigger parameter. Thus, the SET can report the calculated velocity and the calculated position of the SET to the SUPL agent in the SET, if the calculated velocity of the SET satisfies a trigger condition. In other words, the SET first obtain trigger parameters necessary for performing the velocity triggered SUPL service, after receiving the position request. Then, the SET checks whether the current velocity satisfies the criterion which is determined according to the trigger parameters, and tries to obtain the calculated velocity and the calculated position if the current velocity satisfies the criterion. Finally, the SET checks whether the calculated velocity satisfies the trigger condition, i.e., whether a velocity event should be triggered, and reports the calculated position and the calculated velocity to the SUPL agent in the SET if the calculated velocity satisfies the trigger condition. Therefore, according to the process 30, after the SUPL agent and hence the SET receives the position request, the calculated position and the calculated velocity can be reported to the SUPL agent in the SET if the velocity event is triggered, i.e., the trigger condition is satisfied.

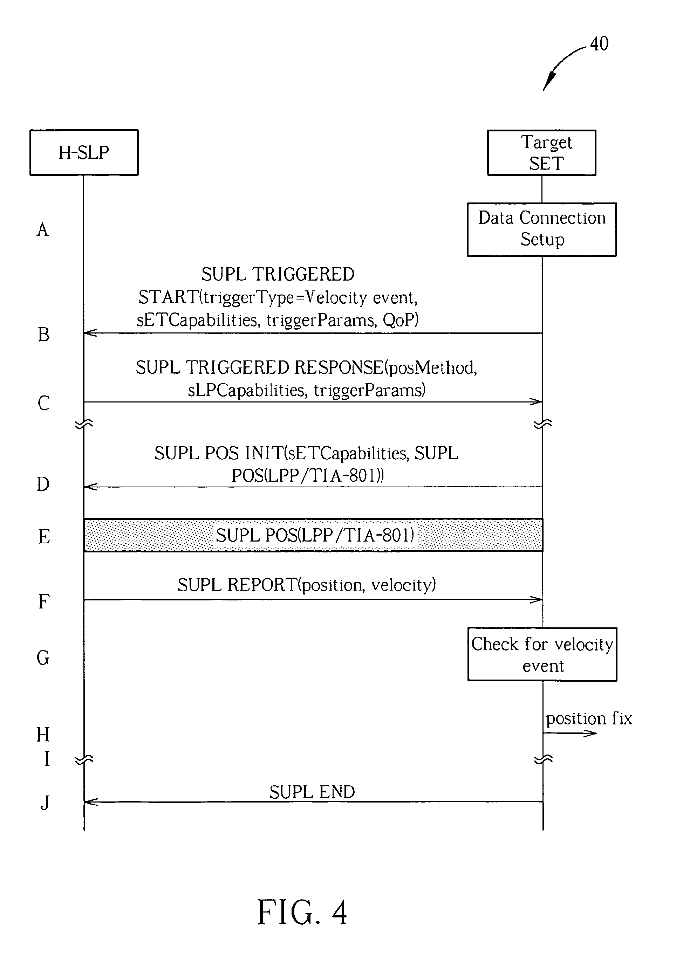

Please note that, a spirit of the process 30 is that a velocity triggered SUPL service can be triggered by a SET by using a velocity event which is related to a current velocity of the SET and at least one trigger parameter for the velocity triggered SUPL service. Realization of the process 30 is not limited. For example, please refer to Fig. 4, which is a flowchart of a process 40 according to an example of the present invention. The process 40 can be seen as a realization of the process 30. According to the process 40, after an SUPL agent of a SET (i.e., target SET) receives a position request which may be generated by an application (e.g., a global positioning system (GPS) related application) of the SET, the SET prepares to establish a data connection between the SET and the H-SLP (Step A). Then, the SET establishes a transport layer security (TLS) connection as the data connection, and transmits a SUPL TRIGGERED START message to the H-SLP (Step B). The SUPL TRIGGERED START message is used for configuring a trigger type ("triggerType") to velocity event, and can include SET capabilities ("sETCapabilities"), quality of position ("QoP") and trigger parameters ("triggerParams") such as a target velocity, a start time, a stop time and a number of reports, etc. After receiving the SUPL TRIGGERED START message, the H-SLP transmits a SUPL TRIGGERED RESPONSE message to the SET (Step C). The SUPL TRIGGERED RESPONSE message can include H-SLP capabilities ("sLPCapabilities"), position method ("posMethod") and determined triggered parameters ("triggerParams") such as the target velocity, the start time, the stop time and the number of reports. Comparing with the triggered parameters transmitted by the SET, the determined triggered parameters are determined by the H-SLP according to the trigger parameters transmitted by the SET. Please note that, other information included in the SUPL TRIGGERED START message, such as the SET capabilities ("sETCapabilities") and the H-SLP capabilities ("sLPCapabilities"), can also be taken into consideration, and is not limited herein.

After receiving the SUPL TRIGGERED RESPONSE message, the SET compares a current velocity of the SET and the target velocity, for determining whether a position fix (i.e., calculated position) is required by using a criterion (Step D) . That is, the SET can determine that the position fix is required, if the criterion is satisfied. For example, the criterion can be that the current velocity is greater (or smaller) than the target velocity, or the current velocity is within (or out) of a predetermined range, and is not limited herein. If the SET determines that the position fix is required, the SET transmits a SUPL POS INIT message including the SET capabilities ("sETCapabilities") and "SUPL POS" to the H-SLP (Step D), for initiating a SUPL POS message exchange with the H-SLP. During the SUPL POS message exchange, the SET and the H-SLP can exchange (or negotiate) position information such as satellite measurement from the SET, assistance data from the H-SLP, and positioning methods, e.g., LTE positioning protocol ("LPP") for the UMTS, the LTE and the LTE-A system, or Telecommunications Industry Association (TIA) 801 ("TIA-801") for a Code Division Multiple Access 2000 (CDMA2000) system (Step E). After the SUPL POS message exchange is completed, the SET or the H-SLP can derive (or calculate) a calculated velocity and a calculated position of the SET according to the position information obtained in the previous steps. If the calculated velocity and the calculated position are obtained (e.g., calculated) by the H-SLP (i.e., SET-Assisted Mode), the H-SLP transmits the calculated velocity and the calculated position to the SET via transmitting a SUPL REPORT message including the calculated velocity ("velocity") and the calculated position ("position") to the SET (Step F).

After obtaining the calculated velocity, the SET determines whether the calculated velocity satisfies a trigger condition, i.e., whether a velocity event should be triggered (Step G) . If the trigger condition is satisfied, i.e., the velocity event is triggered, the SET reports the calculated position (i.e., position fix) and the calculated velocity to the SUPL agent (Step H). Otherwise, the SET goes back to the step D. Similar to the criterion used in the step D, the trigger condition can be that the calculated velocity is greater (or smaller) than the target velocity, or the calculated velocity is within (or out) of a predetermined range, and is not limited herein. The steps D to H are repeated until an end condition is satisfied, i.e., stops velocity triggered SUPL service if the end condition is satisfied. For example, the end condition can be the stop time (i.e., determined in the step C) at which the SET stops reporting the calculated position and the calculated velocity, or the number of reports (i.e., determined in the step C) which is a number of times that the SET can report the calculated position and the calculated velocity. In detail, if the end condition is not satisfied, the SET can repeat the steps D to G if the trigger condition is not satisfied, and the SET can repeat the steps D to H if the trigger condition is satisfied (Step I). If the end condition is satisfied, the SET transmits a SUPL END message to the H-SLP, for notifying the H-SLP that reporting is stopped (Step J).

Therefore, according to the process 40, after the SUPL agent and hence the SET receives the position request, the calculated position and the calculated velocity can be reported to the SUPL agent for performing the velocity triggered SUPL service if the velocity event is triggered, i.e., the trigger condition is satisfied.

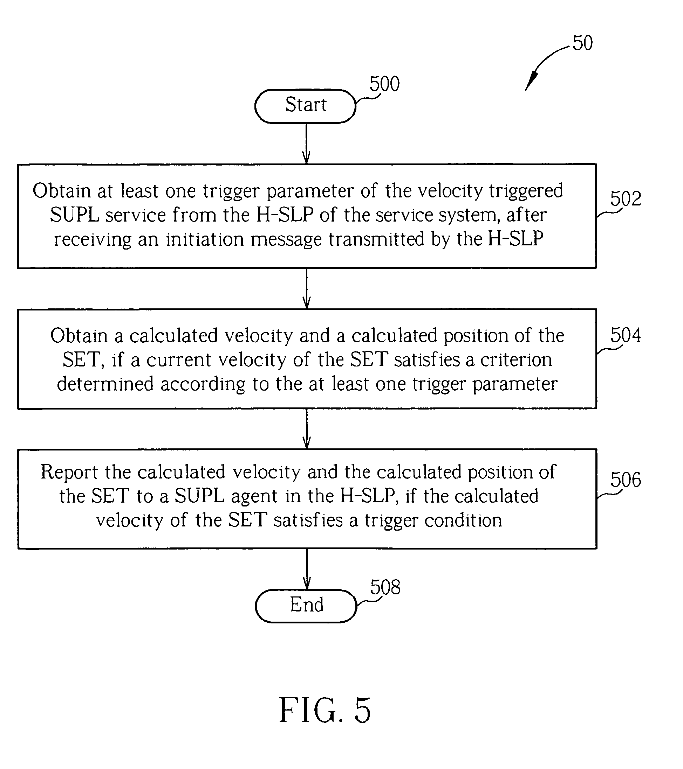

On the other hand, a velocity triggered SUPL service can also be initiated by the H-SLP. Please refer to Fig. 5, which is a flowchart of a process 50 according to an example of the present invention. The process 50 is utilized in a SET shown in Fig. 1, for handling the velocity triggered SUPL service initiated by the H-SLP. The process 50 may be compiled into the program code 214 and includes the following steps:

Step 500: Start.

Step 502: Obtain at least one trigger parameter of the velocity triggered SUPL service from the H-SLP of the service system, after receiving an initiation message transmitted by the H-SLP.

Step 504: Obtain a calculated velocity and a calculated position of the SET, if a current velocity of the SET satisfies a criterion determined according to the at least one trigger parameter.

Step 506: Report the calculated velocity and the calculated position of the SET to a SUPL agent in the H-SLP, if the calculated velocity of the SET satisfies a trigger condition.

Step 508: End.

According to the process 50, after the SET receives an initiation message transmitted by the H-SLP (i.e., the velocity triggered SUPL service is initiated by the H-SLP), the SET first obtains at least one trigger parameter of the velocity triggered SUPL service from the H-SLP of the service system. Then, the SET obtains (e.g., calculates or receives) a calculated velocity and a calculated position of the SET, if a current velocity of the SET satisfies a criterion determined according to the at least one trigger parameter. Thus, the SET can report the calculated velocity and the calculated position of the SET to the SUPL agent in the H-SLP, if the calculated velocity of the SET satisfies a trigger condition. In other words, the SET first obtain trigger parameters necessary for performing the velocity triggered SUPL service, after receiving the initiation message. Then, the SET checks whether the current velocity satisfies the criterion which is determined according to the trigger parameters, and tries to obtain the calculated velocity and the calculated position if the current velocity satisfies the criterion. Finally, the SET checks whether the calculated velocity satisfies the trigger condition, i.e., whether a velocity event should be triggered, and reports the calculated position and the calculated velocity to the SUPL agent in the H-SLP if the calculated velocity satisfies the trigger condition. Therefore, according to the process 50, after the SET receives the initiation message, the calculated position and the calculated velocity can be reported to the SUPL agent in the H-SLP if the velocity event is triggered, i.e., the trigger condition is satisfied.

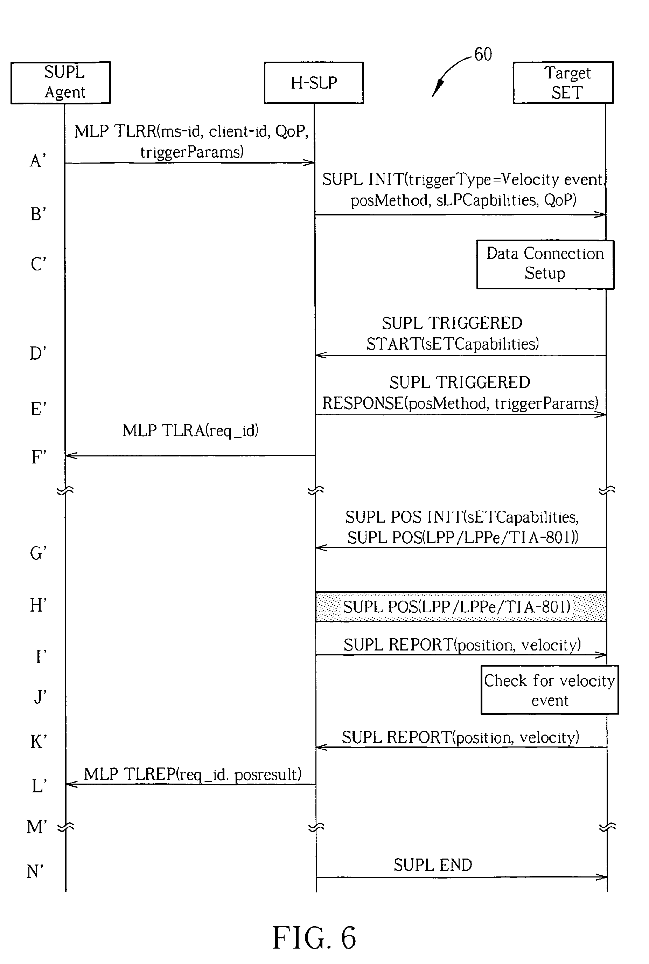

Please note that, a spirit of the process 50 is that a velocity triggered SUPL service can be triggered by a H-SLP by using a velocity event which is related to a current velocity of a SET and at least one trigger parameter for the velocity triggered SUPL service. Realization of the process 50 is not limited. For example, please refer to Fig. 6, which is a flowchart of a process 60 according to an example of the present invention. The process 60 can be seen as a realization of the process 50. According to the process 60, the H-SLP receives a mobile location protocol (MLP) trigger location reporting request (TLRR) message transmitted by a SUPL agent in the H-SLP first at the beginning (Step A'), wherein the MLP TLRR message can include "ms-id", "client-id", "QoP", and trigger parameters ("triggerParams") such as a target velocity, a start time, a stop time and a number of reports, etc. In detail, "ms-id" is an identification of the SET, and "client-id" is an identification of the SUPL agent. Then, the H-SLP transmits a SUPL INIT message to a SET (i.e., target SET) (Step B'). The SUPL INIT message is used for configuring a trigger type ("triggerType") to velocity event, and can include position method ("posMethod"), H-SLP capabilities ("sLPCapabilities"), and "QoP". After receiving the SUPL INIT message, the SET establishes a TLS connection between the SET and the H-SLP (Step C'), and transmits a SUPL TRIGGERED START message to the H-SLP (Step D'). The SUPL TRIGGERED START message can include SET capabilities ("sETCapabilities").

After receiving the SUPL TRIGGERED START message, the H-SLP transmits a SUPL TRIGGERED RESPONSE message to the SET (Step E'). The SUPL TRIGGERED RESPONSE message can include determined position method ("posMethod") (e.g., determined according to the SET capabilities) and determined triggered parameters ("triggerParams") such as the target velocity, the start time, the stop time and the number of reports. Comparing with the triggered parameters transmitted by the SUPL agent, the determined triggered parameters are determined by the H-SLP according to the trigger parameters transmitted by the SUPL agent. Please note that, other information included in the SUPL TRIGGERED START message, such as the SET capabilities ("sETCapabilities") and the H-SLP capabilities ("sLPCapabilities"), can also be taken into consideration, and is not limited herein. Besides, the H-SLP informs the SUPL agent that the MLP TLRR message is accepted via transmitting a MLP triggered location reporting answer (TLRA) message (Step F'), after transmitting the SUPL TRIGGERED RESPONSE message to the SET. The MLP TLRA message can include an identification ("req_id") for identifying the MLP TLRR message.

After receiving the SUPL TRIGGERED RESPONSE message, the SET compares a current velocity of the SET and the target velocity, for determining whether a position fix (i.e., calculated position) is required by using a criterion (StepG'). That is, the SET can determine that the position fix is required, if the criterion is satisfied. For example, the criterion can be that the current velocity is greater (or smaller) than the target velocity, or the current velocity is out of a predetermined range, and is not limited herein. If the SET determines that the position fix is required, the SET transmits a SUPL POS INIT message including the SET capabilities (sETCapabilities) and "SUPL PCS" to the H-SLP (Step G'), for initiating a SUPL POS message exchange with the H-SLP. During the SUPL POS message exchange, the SET and the H-SLP can exchange (or negotiate) position information such as satellite measurement from the SET, assistance data from the H-SLP, and positioning methods, e.g., LTE positioning protocol ("LPP") and LPP extensions ("LPPe") for the UMTS, the LTE and the LTE-A system, or "TIA-801" for a Code Division Multiple Access 2000 (CDMA2000) system (Step H'). After the SUPL POS message exchange is completed, the SET or the H-SLP can derive (or calculate) a calculated velocity and a calculated position of the SET according to the position information obtained in the previous steps. If the calculated velocity and the calculated position are obtained (e.g., calculated) by the H-SLP (i.e., SET-Assisted Mode), the H-SLP transmits the calculated velocity and the calculated position to the SET via transmitting a SUPL REPORT message including the calculated velocity ("velocity") and the calculated position ("position") to the SET (Step I'). Alternatively, the SET obtains (e.g., calculates) the calculated velocity and the calculated position by using the assistance information according to the assistance data obtained in the step H' (i.e., SET-Based Mode).

Thus, the SET can determine whether the calculated velocity satisfies a trigger condition, i.e., whether a velocity event should be triggered (Step J'). If the trigger condition is satisfied, i.e., the velocity event is triggered, the SET reports the calculated position and the calculated velocity to the H-SLP via transmitting a SUPL REPORT message comprising the calculated position ("position") and the calculated velocity ("velocity") (Step K'). Otherwise, the SET goes back to the step G'. Similar to the criterion used in the step G', the trigger condition can be that the calculated velocity is greater (or smaller) than the target velocity, or the calculated velocity is out of a predetermined range, and is not limited herein. After receiving the SUPL REPORT message transmitted by the SET, the H-SLP transmits a MLP triggered location report (TLREP) message to the SUPL agent (Step L'), wherein the MLP TLREP message can include the identification ("req_id") for identifying the MLP TLRR message, and the calculated position and the calculated velocity ("posresult") . The steps G' to L' are repeated until an end condition is satisfied, i.e., stops velocity triggered SUPL service if the end condition is satisfied. For example, the end condition can be the stop time (i.e., determined in the step E') at which the SET stops reporting the calculated position and the calculated velocity, or the number of reports (i.e., determined in the step E') which is a number of times that the SET can report the calculated position and the calculated velocity. In detail, if the end condition is not satisfied, the SET can repeat the steps G' to J' if the trigger condition is not satisfied, and the SET can repeat the steps G' to L' if the trigger condition is satisfied (Step M'). After the end condition is satisfied, the H-SLP transmits a SUPL END message to the SET, for notifying the SET to stop reporting (Step N').

Therefore, according to the process 60, after the SET receives the initiation message, the calculated position and the calculated velocity can be reported to the H-SLP and hence the SUPL agent for performing the velocity triggered SUPL service if the velocity event is triggered, i.e., the trigger condition is satisfied.

Please note that, the calculated velocity mentioned above (e.g., in the processes 30, 40, 50 and 60) can be an updated velocity of the SET or a velocity fix to the current velocity of the SET. Similarly, the calculated position mentioned above (e.g., in the processes 30, 40, 50 and 60) can be an updated position of the SET or a position fix to the current position of the SET. In general, a position field and a velocity field are used in the messages mentioned above for transmitting the calculated velocity and the calculated position, respectively. More specifically, the velocity field is preferably included in the position field. Thus, when the calculated position is transmitted, the calculated velocity is also transmitted with the calculated position. That is, when the SET obtains (e. g. , receives) the calculated position, the SET also obtains the calculated velocity. Besides, those skilled in the art should readily modify information (e.g., parameters) included in the messages mentioned above according to system requirements and design considerations.

The abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 20.

To sum up, the present invention provides methods for handling a velocity triggered SUPL service, wherein the velocity triggered SUPL service can be initiated by a H-SLP or a SET. According to the present invention, after a position request or an initiation message is generated, the SET starts to operate the velocity triggered SUPL service. The SET operates the velocity triggered SUPL service completely, if a current velocity of the SET satisfies a trigger condition determined according to at least one trigger parameter which is obtained via negotiation between the H-SLP and the SET. Thus, the SET can operate the velocity triggered SUPL service regularly.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling a velocity triggered service for a communication device in a service system, the method comprising:
obtaining at least one first trigger parameter of the velocity triggered service from a location platform of the service system, after an agent in the communication device receives a position request;
obtaining a calculated velocity and a calculated position of the communication device, if a current velocity of the communication device satisfies a criterion determined according to the at least one first trigger parameter; and
reporting the calculated velocity and the calculated position of the communication device to the agent in the communication device, if the calculated velocity of the communication device satisfies a trigger condition.

2. The method of claim 1, wherein the step of obtaining the at least one first trigger parameter of the velocity triggered service from the location platform of the service system, after the agent in the communication device receives the position request comprises:
establishing a connection between the communication device and the location platform;
transmitting a triggered start message to the location platform via the connection, wherein the triggered start message comprises a trigger type configured to velocity event and at least one second parameter of the velocity triggered service; and
receiving a triggered response message transmitted by the location platform, wherein the triggered response message comprises the at least one first trigger parameter determined by the location platform according to the at least one second trigger parameter.

3. The method of claim 1, wherein the step of obtaining the calculated velocity and the calculated position of the communication device, if the current velocity of the communication device satisfies the criterion determined according to the at least one first trigger parameter comprises:
transmitting a position initiation message to the location platform, for initiating a position message exchange with the location platform, if the current velocity of the communication device satisfies the criterion determined according to the at least one first trigger parameter; and
exchanging information with the location platform during the position message exchange, to obtain the calculated velocity and the calculated position of the communication device.

4. The method of claim 3, wherein the communication device obtains the calculated velocity and the calculated position of the communication device according to the information obtained during the position message exchange.

5. The method of claim 3, wherein the location platform obtains the calculated velocity and the calculated position of the communication device according to the information obtained during the position message exchange, and transmits the calculated velocity and the calculated position of the communication device to the communication device.

6. The method of claim 5, wherein the location platform transmits the calculated velocity and the calculated position of the communication device to the communication device via transmitting a report message to the communication device.

7. The method of claim 1, further comprising:
stopping the velocity triggered service, if an end condition of the velocity triggered service is satisfied; and
transmitting an end message to the location platform.

8. A method of handling a velocity triggered service, for a communication device in a service system, the method comprising:
obtaining at least one trigger parameter of the velocity triggered service from a location platform of the service system, after receiving an initiation message transmitted by the location platform;
obtaining a calculated velocity and a calculated position of the communication device, if a current velocity of the communication device satisfies a criterion determined according to the at least one trigger parameter; and
reporting the calculated velocity and the calculated position of the communication device to a agent in the location platform, if the calculated velocity of the communication device satisfies a trigger condition.

9. The method of claim 8, wherein the step of obtaining the at least one trigger parameter of the velocity triggered service from the location platform of the service system, after receiving the initiation message transmitted by the location platform comprises:
receiving the initiation message transmitted by the location platform, wherein the initiation message comprises a trigger type configured to velocity event;
establishing a connection between the communication device and the location platform;
transmitting a triggered start message to the location platform via the connection; and
receiving a triggered response message transmitted by the location platform, wherein the triggered response message comprises the at least one trigger parameter.

10. The method of claim 8, wherein the location platform transmits the initiation message to the communication device, after receiving a location reporting request message transmitted by the agent, wherein the location reporting request message comprises the at least one trigger parameter.

11. The method of claim 8, wherein the step of obtaining the calculated velocity and the calculated position of the communication device, if the current velocity of the communication device satisfies the criterion determined according to the at least one trigger parameter comprises:
transmitting a position initiation message to the location platform, for initiating a position message exchange with the location platform, if the current velocity of the communication device satisfies the criterion determined according to the at least one trigger parameter; and
exchanging information with the location platform during the position message exchange, to obtain the calculated velocity and the calculated position of the communication device.

12. The method of claim 11, wherein the communication device obtains the calculated velocity and the calculated position according to the information obtained during the position message exchange, and transmits the calculated velocity and the calculated position to the location platform.

13. The method of claim 11, wherein the location platform obtains the calculated velocity and the calculated position according to the information obtained during the position message exchange, and transmits the calculated velocity and the calculated position to the communication device.

14. The method of claim 8, wherein the communication device transmits the calculated velocity and the calculated position to the location platform, and the location platform transmits the calculated velocity and the calculated position to the agent via transmitting a triggered location report message to the agent.

15. The method of claim 8, wherein the communication device stops the velocity triggered service if an end condition of the velocity triggered service is satisfied, and the location platform transmits an end message to the communication device if the end condition of the velocity triggered service is satisfied.
